# EUROPEAN PATENT APPLICATION

(11) **EP 1 870 850 A1**
(43) Date of publication of application: **26.12.2007**
(21) Application number: 07108416.4
(22) Date of filing: 17.05.2007
(51) Int. Cl.: G06Q 30/00, H04L 29/08, H04L 29/14

(54) **Connection adapter for communication device**

(30) Priority: 22.05.2006 JP 2006141868
(71) Applicant: Sanden Corporation, Isesaki-shi, Gunma 372-8502 (JP)
(72) Inventor: Iwasaki, Wataru, Isesaki-shi Gunma 372-8502 (JP)
(74) Representative: Haley, Stephen

(57) **Abstract**

A connection adapter (1) is arranged to intervene between a communication device (20) for connection to a radio packet communication network (40) and high-level equipment (10) which performs communication via the communication device (20). The connection adapter (1) includes a communication controller (122) which controls relay of communication via the radio packet communication network (40) between the high-level equipment (10) and a destination of communication thereof; and an indicator (110) which indicates information on the result of the communication each time the communication terminates.

## Description

The present invention relates to the field of telemetering used for such purposes as collection of sales information from vending machines and to the field of telematics used for distribution of traffic information to mobile objects and like purposes. More particularly, the present invention relates to a connection adapter for connecting a communication device used in these fields to high-level equipment that uses the communication device.

Today, telemetering and telematics techniques by which information is collected and/or distributed via radio packet communication networks are in increasingly extensive use. Telemetering used to be a generic term referring to mechanisms for reading measurements by measuring instruments using a communication line. It now finds a broader range of reference, covering not only reading of data but also the monitoring of operation or remote control of devices. Typical applications of telemetering include sales management systems for vending machines, consumption management systems for gas, water and other utilities, and management systems for unmanned parking lots. For an example of sales management systems for vending machines, reference may be made to Japanese Patent Publication 2003-51056. Telematics means real-time supply of information services to mobile objects such as vehicles in combination with a communication system. Typical applications of telematics include a vehicle-mounted information system for providing traffic information, navigation information and the like in real time to terminals installed on automobiles.

Techniques in these fields require a communication device for connection to a radio packet communication network and high-level equipment that uses the communication device at a remote location. The high-level equipment corresponds to DTE (Data Terminal Equipment), and the communication device, to DCE (Data Circuit-terminating Equipment).

In a sales management system for vending machines, for example, a control device for controlling sales actions or the inside temperature corresponds to the high-level equipment. Each unit of high-level equipment is connected to a predetermined network via a communication device regularly or at random timing and is connected to a predetermined management computer via the network. The high-level equipment connected to the management computer transmits various sets of data on the objects to be controlled.

However, conventional systems of this kind have a problem that, when a communication failure has occurred, it is difficult to identify its cause. That is, conventional systems require a measuring instrument such as a protocol analyzer for identification of the cause. Also, operators of such instrument are required to have expertise in communication techniques. However, it is practically impossible to provide such equipment and staff all the time in a place where the high-level equipment and the like are installed. Consequently, in the event of a communication failure, persons at the site of the failure cannot identify the cause by themselves and a specialist needs to go to the location with equipment to address the trouble. This leads to a problem of high management costs.

The communication device described above typically has an indicator for showing various conditions of communication. However, this indicator is mainly for showing the current condition and does not supply sufficient information for identifying the cause of a communication failure after its occurrence.

An object of the invention is to improve maintainability by enabling the cause of a communication failure to be easily identified.

To attain the above object, the present application proposes a connection adapter for communication devices, comprising: a first interface for connection to a communication device for use in a radio packet communication network; a second interface for connection to high-level equipment which performs communication utilizing TCP/IP by using said communication device; a connection controller which controls the connection between said high-level equipment and said radio packet communication network; a communication controller which relays communication by said high-level equipment using said communication device; and an indicator which indicates information on the result of said communication each time the communication terminates.

The connection adapter according to the invention intervenes between the high-level equipment and the communication device, and the communication control unit controls the relay of communication between the high-level equipment and a destination of communication thereof. Each time the communication terminates, information on the result of the communication is indicated on the indicator of the connection adapter. Accordingly, when communication has terminated abnormally due to occurrence of a communication failure, information useful for identification of the cause of the abnormal termination is indicated as result information. This facilitates identification of the cause of a failure and thus enhances maintainability.

It is preferable that the indicator further indicate status information such as operation condition and radio wave condition during communication and standby in addition to the result information. This can save costs because a common indicator is used for indicating both communication conditions and result information.

As an example, the indicator may be formed of a plurality of light emitting elements. In this case, result information is indicated by combination of lighting or temporal change of their lighting pattern of the light emitting elements. Such way of indication enables indication of many kinds of result information.

In the present application, the high-level equipment is supposed to correspond to DTE (Data Terminal Equipment). The communication device is supposed to correspond to DCE (Data Circuit-terminating Equipment).

Other objects, configurative aspects and advantages of the invention will become apparent from the following detailed description.

**IN THE DRAWINGS:**
Fig. 1 shows the configuration of a communication system;
Fig. 2 shows an outer perspective view of a connection adapter;
Fig. 3 shows the configuration of the connection adapter;
Fig. 4 illustrates an example of setting information in the connection adapter;
Fig. 5 illustrates an example of a result information code table;
Fig. 6 illustrates the sequence of starting communication from high-level equipment;
Fig. 7 illustrates address conversion processing;
Fig. 8 illustrates the sequence of starting communication from a management computer;
Fig. 9 illustrates the sequence of starting communication from the management computer;
Fig. 10 illustrates address conversion processing; and
Fig. 11 is a flowchart illustrating the operation of an indication control unit.

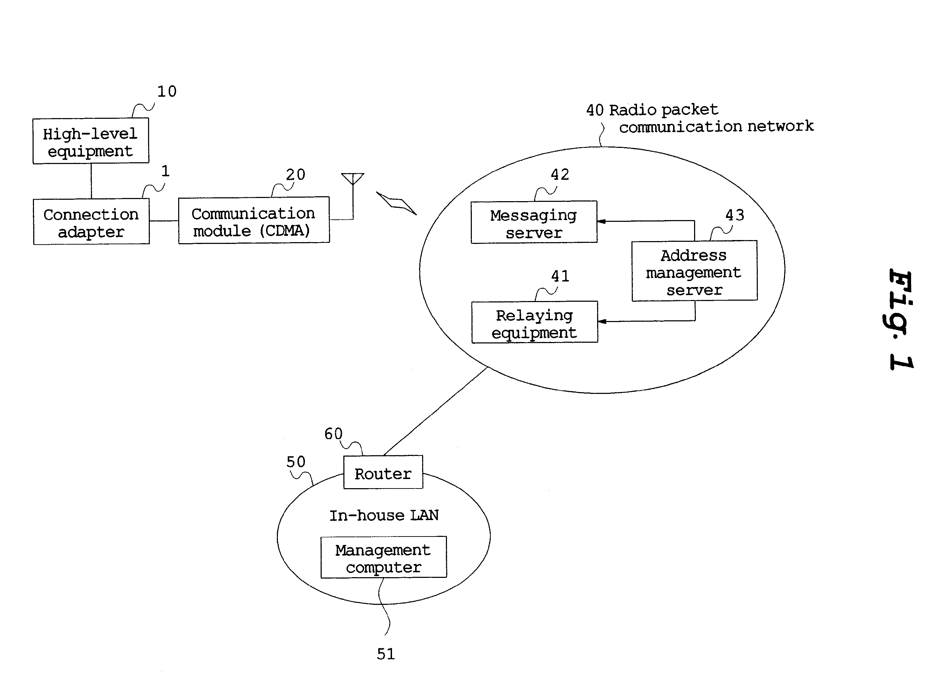

A communication system according to an embodiment of the invention will be described with reference to drawings. Fig. 1 shows a configuration of a telemetering system that uses the communication system according to the invention.

As shown in Fig. 1, this system provides a network environment in which high-level equipment 10, which may be a computer for sewage flow rate monitoring, for example, is connected with an in-house LAN 50 via a radio packet communication network 40.

It is supposed here that the high-level equipment 10 and a terminal on the in-house LAN 50 (a management computer 51 in the example of Fig. 1) are set for use for a network connection service that assigns IP addresses in a fixed manner. On the other hand, the radio packet communication network 40 is supposed to provide another network service that dynamically assigns IP addresses. According to the invention disclosed by the present application, a connection adapter 1 is arranged to intervene between the high-level equipment 10 and a communication module 20, and this connection adapter 1 absorbs differences in network environments.

The high-level equipment 10 corresponds to DTE (Data Terminal Equipment). The high-level equipment 10 is designed to match a specific carrier and a network connection service provided by that carrier. More specifically, it presupposes the use of a network connection service which assigns a fixed IP address to each connection terminal. The high-level equipment 10 is also designed to be connected to a communication module matching the service and to match a connection protocol, an authentication protocol and the like matching that service.

The network connection service which the high-level equipment 10 presupposes will be described. In this network connection service, a telephone number is allocated in advance to each communication module by the carrier. The radio packet communication network provided by the network connection service is provided with relaying equipment which performs connection control, packet relaying and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as the in-house LAN. Connection to the relaying equipment is permitted only from a communication module to which a telephone number is allocated in advance.

The communication system according to this embodiment presupposes the use of such high-level equipment 10 and the management computer 51 as they are, and allows architecting of a network system even in the radio packet communication network 40 in which a network connection service that assigns dynamic IP addresses is provided.

Next, the network connection service that assigns dynamic IP addresses and is used in this embodiment of the invention will be described. In this network connection service, a telephone number is allocated to the communication module 20 in advance by the carrier. As shown in Fig. 1, the radio packet communication network 40 is provided with relaying equipment 41 that performs connection control, packet relaying and so forth. A terminal having the communication module 20 is connected to the radio packet communication network 40 by designating a predetermined special number and initiating a call to that number. This terminal is made connectable to the in-house LAN 50, the network to which it is to be connected, by performing authentication processing with the relaying equipment 41 using PAP (Password Authentication Protocol). In the PAP authentication, the network to be connected is specified by including a user name which specifies the destination of connection. In this network connection service, a group of IP addresses in a predetermined range are allocated to the radio packet communication network 40 by the carrier. An IP address included in the group of IP addresses is dynamically allocated to each communication module 20 by IPCP (Internet Protocol Control Protocol).

The IP address assigned to the connection terminal is a predetermined one. As shown in Fig. 1, an address management server 43 is disposed in the radio packet communication network 40. This address management server 43 manages a list of telephone numbers of connection terminals and IP addresses that are distributed to the terminals having those telephone numbers. Specifically, the address management server 43 is provided with an address matching table that states the relationship of matching between the telephone numbers and the IP addresses. This address management server 43 also provides users with interfaces for updating the address matching table.

In this connection service, the radio packet communication network 40, when a terminal comes into connection, acquires a telephone number of the connection terminal. The network 40 then acquires an IP address matching that telephone number from the address matching table, and distributes the acquired IP address to the connection terminal. This address distribution uses the IPCP. Thus in this embodiment, though it uses the IPCP which is a dynamic IP assigning technique, the IP address distributed is a predetermined one.

Also, in this connection service, the radio packet communication network 40 receives from the in-house LAN 50 an IP packet destined for the IP address matching the terminal and, when the terminal is not connected to the radio packet communication network 40, a messaging server 42 transmits a message. More specifically, the messaging server 42 acquires from the address management server 43 a telephone number matching the received IP packet, and transmits the message to that telephone number. This messaging service is not a network connection service using TCP/IP, but is implemented by a unique protocol utilizing the radio communication network. This enables the terminal to recognize the receipt of a connection request from the in-house LAN 50.

Next, the connection adapter 1 will be described in detail. This connection adapter 1 is intended to connect the high-level equipment 10, which corresponds to Data Terminal Equipment, and the communication module 20, which corresponds to DCE (Data Circuit-terminating Equipment). The connection adapter 1 of this embodiment matches the communication module 20 of the CDMA (Code Division Multiple Access) standards. The communication module 20 is a communication device to be connected to the radio packet communication network 40 which is architected by a corresponding carrier, and matches the communication standards, communication protocol and service determined by the carrier on its own. As stated above, the high-level equipment 10 is designed to match a specific carrier and the service provided by that carrier. More specifically, the high-level equipment 10 is designed to accept the connection of a communication module matching that service and to be compatible with a connection protocol, an authentication protocol and the like matching that service.

The high-level equipment 10 of this embodiment is supposed to permit direct connection to a communication module of the PDC (Personal Digital Cellular) standards and a communication module of the PHS (Personal Handy-phone System) standards. It is further supposed to be made connectable to the in-house LAN 50 via each radio packet communication network using these communication modules. The connection adapter 1 of this embodiment is made connectable to the in-house LAN 50 via the radio packet communication network 40 using the communication module 20 of the CDMA standards without requiring remodeling or altering of the high-level equipment 10. The connection adapter 1 will be described in further detail below.

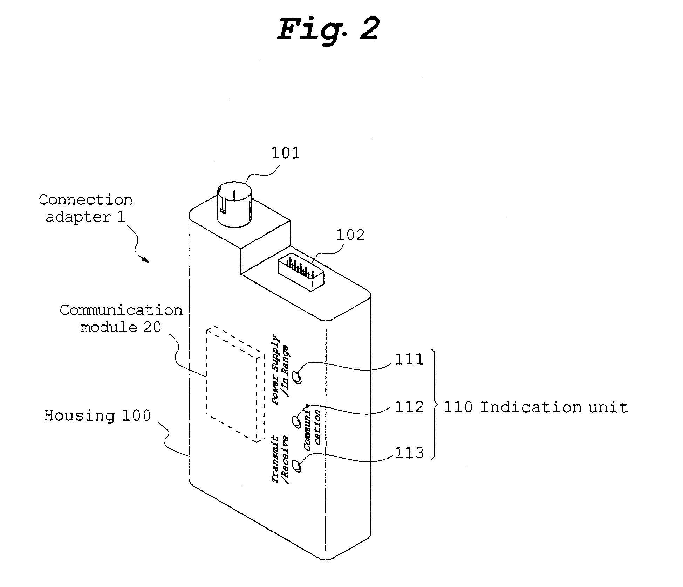

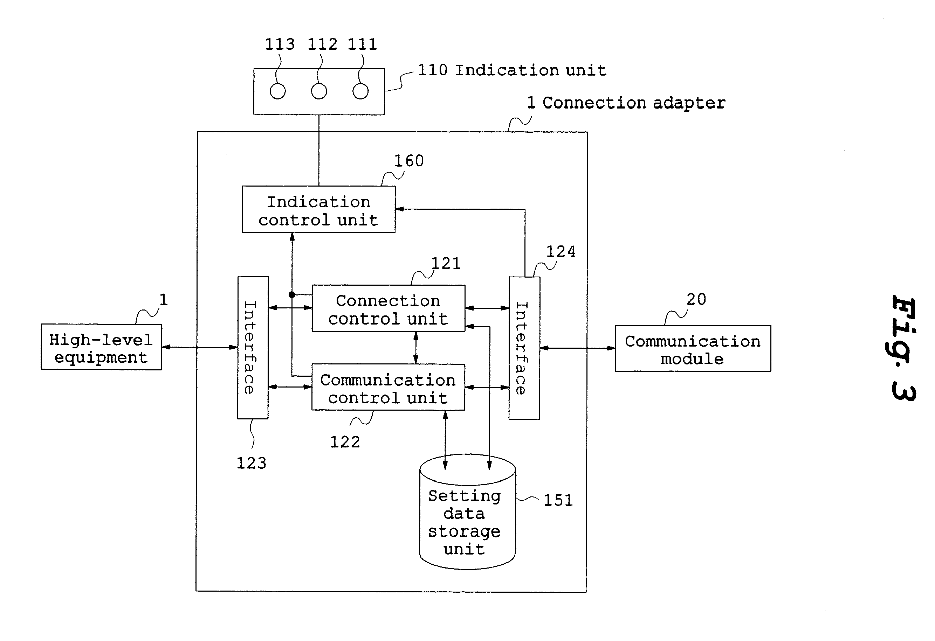

The connection adapter 1 of this embodiment will be described in detail with reference to Fig. 2 and Fig. 3. Fig. 2 shows an outer perspective view of the connection adapter 1, and Fig. 3 shows a functional block diagram of the connection adapter 1. Fig. 3 only shows configurative elements pertaining to the essentials of the invention, omitting other elements.

As illustrated in Fig. 2, the connection adapter 1 contains the communication module 20 described above inside a box-shaped housing 100 in a removable manner. On a side of the housing 100, a connector 101 for antenna connection and a connector 102 for connection to the high-level equipment 10 are mounted. On the main surface of the housing 100, an indication unit 110 is provided. This indication unit 110 is formed of a first through third LEDs 111 to 113 which are light emitting elements.

As shown in Fig. 3, the connection adapter 1 is provided with a connection control unit 121 for performing connection control such as establishment of line connection, a communication control unit 122 for controlling data communication over a connection established by the connection control unit 121, an interface 123 for interfacing with the high-level equipment 10, an interface 124 for interfacing with the communication module 20, a setting data storage unit 151 in which various setting data are stored, and a indication control unit 160 for controlling display of the display unit 110. The connection control unit 121 performs line connection control by AT commands and IP layer connection control by LCP (Link Control Protocol) and IPCP. The communication control unit 122 performs processing of conversion of IP addresses contained in the headers of the IP layer, processing of proxy response regarding TCP packets, and so forth in data communication over the connection established by the connection control unit 121.

The connection control unit 121 and the communication control unit 122 subject data between the high-level equipment 10 and the communication module 20 to processing of conversion, transmission, discarding and other manners of processing in accordance with predetermined rules. The data necessary for these manners of data processing are stored in the setting data storage unit 151.

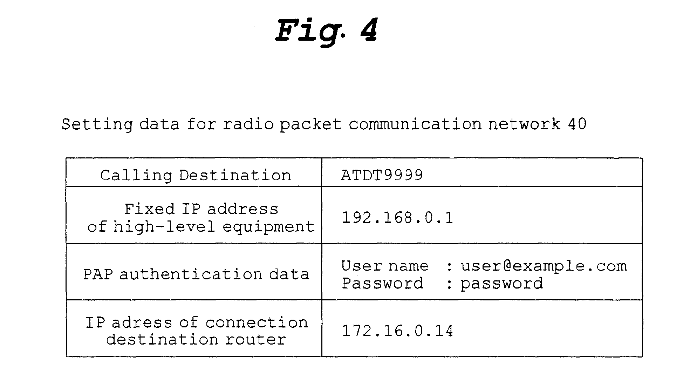

The data stored in the setting data storage unit 151 will be described with reference to Fig. 4. As shown in Fig. 4, the setting data storage unit 151 has stored therein call initiation commands (including telephone numbers) for connection to the radio packet communication network 40, the fixed IP address of the high-level equipment 10, authentication data that is necessary at the time of connection to the radio packet communication network 40, and the IP address of a router 60 which is the destination of connection. The setting data storage unit 151 is formed of a nonvolatile memory, such as an EPROM, for example.

The indication control unit 160 controls indication on the indication unit 110, which is formed of the first to third LEDs 111 through 113. The indication control by the indication control unit 160 is generally classified into a normal indication mode and a result indication mode. The normal indication mode is a mode applied during time periods except immediately after termination of communication (i.e., during standby time and communication). In the normal indication mode, the indication control unit 160 controls the lighting of the first LED 111 in accordance with radio wave condition received from the communication module 20 via the interface 124. The indication control unit 160 controls the lighting of the second LED 112 in accordance with online status on the basis of signals from the communication module 20. The indication control unit 160 controls the lighting of the third LED 113 in accordance with traffic on the basis of signals from the communication control unit 122.

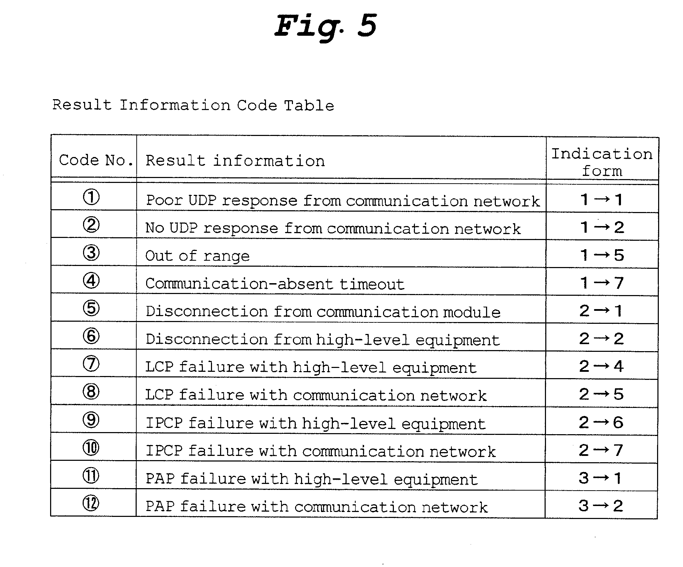

The indication control unit 160 also stores a result information code table for indicating result information in the result indication mode. An example of the code table is shown in Fig. 5. As shown in Fig. 5, in the result information code table, such pieces of information are stored as a code number, result information that shows the details of a communication result, and indication form information for indicating the result. Each piece of information stored in the result information code table includes both information for a case of normal termination and that for a case of abnormal termination. In the case of a normal termination, information for identifying how the communication has terminated is stored (entries of code numbers 5 and 6 in Fig. 5). In the case of an abnormal termination, information for identifying the cause of the failure that has occurred is stored (entries other than code numbers 5 and 6 in Fig. 5). Details of the operation of the indication control unit 160 and indication form information in the code table will be described afterwards.

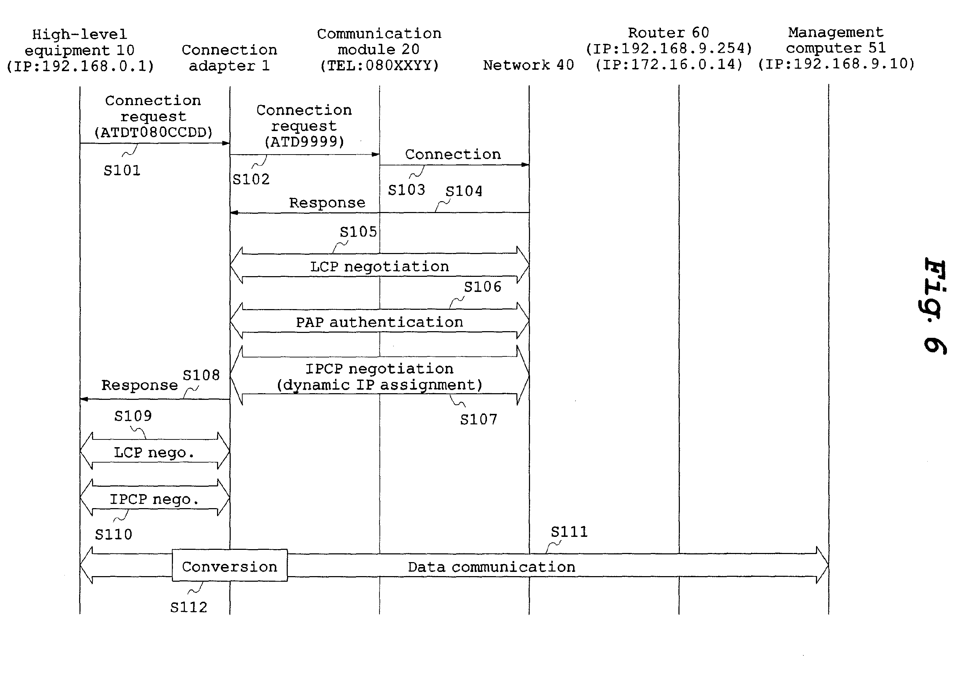

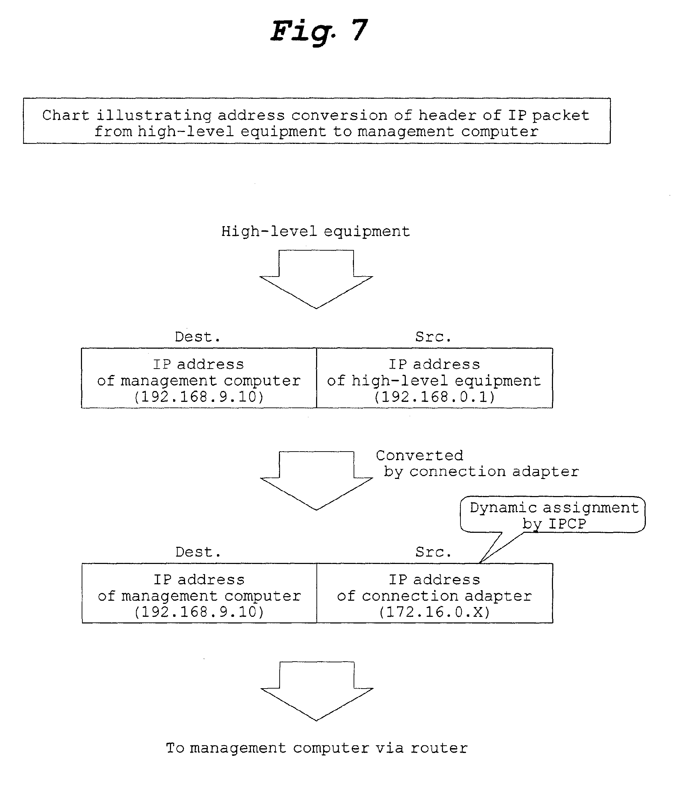

Next, the communication procedure in this system will be described with respect to drawings. First, a case of starting communication from the high-level equipment 10 to the management computer 51 will be described with reference to Fig. 6 and Fig. 7. Fig. 6 is a sequence chart showing a case of starting communication from the high-level equipment to the management computer; and Fig. 7 illustrates the conversion process of an IP address stated in the header of an IP packet transmitted from the high-level equipment.

As shown in Fig. 6, when the high-level equipment 10 initiates a call to the connection adapter 1 with an "ATDT080CCDD" command (step S101), the connection control unit 121 of the connection adapter 1 converts the command into "ATD9999" and transfers it to the communication module 20 (step S102). This call initiation may be triggered by the generation of an IP packet having a destination address of 192.168.9.10 as shown in Fig. 7, for example. The AT command causes the communication module 20 to initiate a call to the relaying equipment 41 in the radio packet communication network 40 (step S103). Upon receiving a response "CONNECT" to the effect that connection has been completed at the line level via the communication module 20 (step S104), the connection control unit 121 of the connection adapter 1 starts processing to connect the connection adapter 1 to the in-house LAN 50 by PPP (Point-to-Point Protocol).

First, the connection control unit 121 of the connection adapter 1 starts an LCP negotiation with the relaying equipment 41 of the radio packet communication network 40 (step S105). Next, the connection control unit 121 of the connection adapter 1 processes PAP authentication with the relaying equipment 41 of the radio packet communication network 40 (step S106). This PAP authentication, through it is not supposed for the high-level equipment 10, is necessary when the radio packet communication network 40 pertaining to this embodiment is to be used. Therefore in this embodiment, the connection adapter 1 performs the authentication on behalf of the high-level equipment 10. Upon completion of this authentication processing, the connection control unit 121 of the connection adapter 1 starts an IPCP negotiation between the connection adapter 1 and the relaying equipment 41 of the radio packet communication network 40 (stepS107). This results in completion of the IPCP negotiation, and a dynamic IP address of 172.16.0.X is assigned to the connection control unit 121 of the connection adapter 1 from the radio packet communication network 40. The IP address assigned here is predetermined for the communication module 20, which is a connection terminal. The assigned dynamic IP address is stored in storage means such as an EPROM (not shown).

Upon completion of the PPP negotiation, the connection control unit 121 transmits to the high-level equipment 10 a response "CONNECT" to the effect that connection has been completed at the line level (step S108). Having received the response, the high-level equipment 10 starts an LCP negotiation and an IPCP negotiation (steps S109 and S110). A point to be noted here is that the connection control unit 121 of the connection adapter 1 responds to the high-level equipment 10.

As the foregoing processing completes the connection between the high-level equipment 10 and the in-house LAN 50, the high-level equipment 10 starts data communication to the management computer 51 (step S111). Hereupon, the communication control unit 122 of the connection adapter 1 performs address conversion of the header of the IP packet (step S112). More specifically, as shown in Fig. 7, the fixed terminal IP address (192.168.0.1) and the dynamic terminal IP address (172.16.0.X) are converted into each other. This processing makes possible communication with the management computer 51 started from the high-level equipment 10.

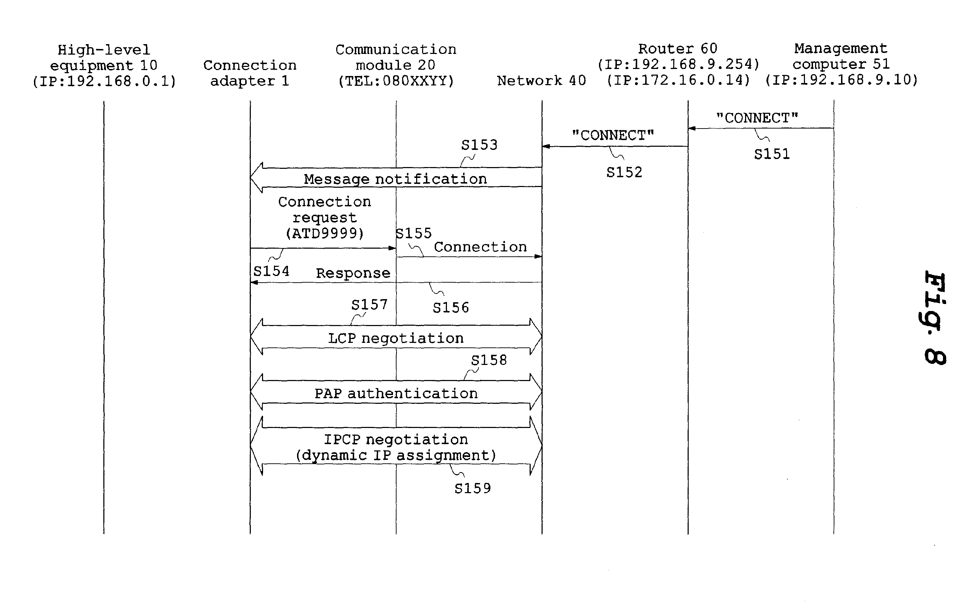

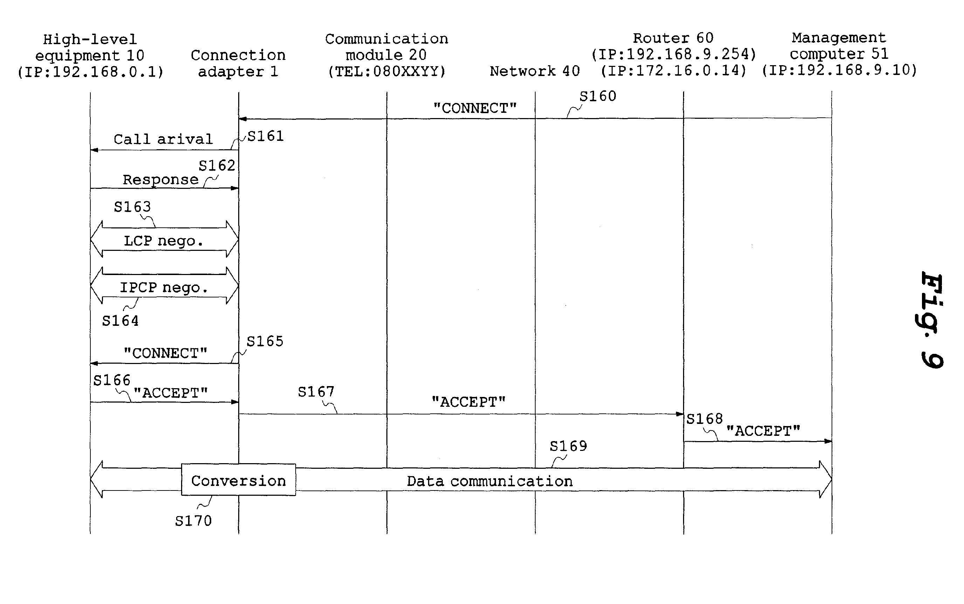

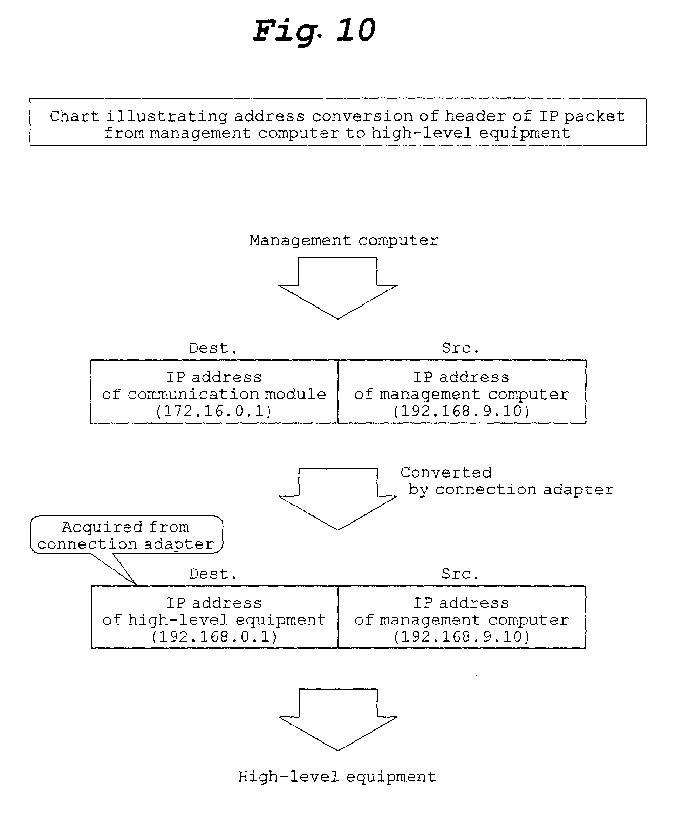

Next, a case where communication is started from the management computer 51 of the in-house LAN 50 to the high-level equipment 10 will be described with reference to Fig. 8 through Fig. 10. Figs. 8 and 9 are sequence diagrams showing communication started from the management computer, and Fig. 10 illustrates the process of address conversion.

It is supposed here that the address management server 43 has allocated an IP address of "172.16.0.1" to the communication module 20 connected to the high-level equipment 10.

When the management computer 51, in order to communicate with the high-level equipment 10 which is the communication destination, issues a connection request destined for the IP address "172.16.0.1" of the communication module 20 connected to the high-level equipment 10 (step S151), the router 60 relays the packet to the radio packet communication network 40 according to usual routing rules (step S152).

The radio packet communication network 40 references the destination IP address of the packet received from the router 60 and acquires a telephone number matching the IP address from the address management server 43. Then, the radio packet communication network 40 notifies the holder of the telephone number of the receipt of a connection request from the in-house LAN 50 by using a messaging service (step S153). The radio packet communication network 40 discards the packet pertaining to the connection request received from the router 60.

Having received the message, the connection control unit 121 of the connection adapter 1 starts processing of connection to the in-house LAN 50 on the basis of setting data stored in the setting data storage unit 151. More specifically, the connection control unit 121 delivers an "ATD9999" command to the communication module 20 (step S154). In response to this AT command, the communication module 20 initiates a call to the relaying equipment 41 in the radio packet communication network 40 (step S155). Upon receipt of a response "CONNECT" to the effect that connection has been completed at the line level via the communication module 20 (step S156), the connection control unit 121 of the connection adapter 1 starts processing to connect the connection adapter 1 to the in-house LAN 50 by PPP.

First, the connection control unit 121 of the connection adapter 1 starts an LCP negotiation with the relaying equipment 41 of the radio packet communication network 40 (step S157). The connection control unit 121 of the connection adapter 1 then performs PAP authentication with the relaying equipment 41 of the radio packet communication network 40 (step S158). Then, the connection control unit 121 of the connection adapter 1 starts an IPCP negotiation between the connection adapter 1 and the relaying equipment 41 of the radio packet communication network 40 (step S159). This results in completion of the IPCP negotiation, and a dynamic IP address of 172.16.0.X is assigned to the connection control unit 121 of the connection adapter 1 from the radio packet communication network 40. As stated above, the IP address assigned here is predetermined for the communication module 20, which is a connection terminal. The assigned dynamic IP address is stored in storage means such as an EPROM (not shown).

Upon completion of the PPP negotiation, a connection requesting packet arrives at the connection adapter 1 from the management computer 51 (step S160). As stated above, the radio packet communication network 40 discarded at step S151 the packet delivered from the management computer 51. Therefore, the management computer 51 is unable to receive the response to the connection requesting packet and retransmits a connection requesting packet owing to a timeout. Since the processing from steps S153 through S159 described above takes some time, some of the retransmitted packets further run into a timeout. Therefore, the connection requesting packet that arrives at the connection adapter 1 is the latest of the number of retransmitted packets.

The connection control unit 121 of the connection adapter 1, upon receipt of the connection requesting packet from the management computer 51, notifies the high-level equipment 10 of the call arrival (step S161). The high-level equipment 10, upon receipt of the notification of the call arrival, notifies the connection adapter 1 of the response to that notification of the call arrival (step S162), and starts an LCP negotiation and an IPCP negotiation (steps S163, S164). A point to be noted here is that the connection control unit 121 of the connection adapter 1 responds to the high-level equipment 10.

The connection control unit 121 of the connection adapter 1 transfers to the high-level equipment 10 the connection requesting packet received from the management computer 51 at step S160 (step S165). Having received the connection requesting packet, the high-level equipment 10 returns the response to the connection adapter 1 (step S166). The connection adapter 1 relays the response packet to the router 60 (step S167). The router 60 relays the response packet to the management computer 51 in accordance with the usual routing rules (step S168).

The foregoing processing causes the high-level equipment 10 to determine that connection to the management computer 51 has been completed, and starts data communication to the management computer 51 (step S169). Hereupon, the communication control unit 122 of the connection adapter 1 performs address conversion of the header of the IP packet (step S170) . More specifically, as shown in Fig. 10, the fixed terminal IP address (172.168.0.1) and the dynamic terminal IP address (172.16.0.1) are converted into each other.

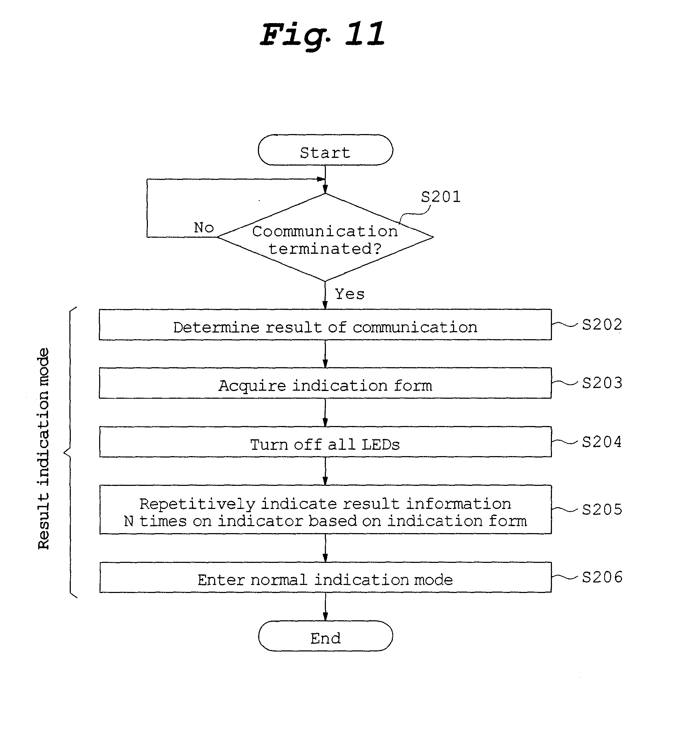

Next, the operation of the indication control unit 160 of the connection adapter 1 will be described with reference to the flowchart shown in Fig. 11. As stated above, the indication control unit 160 operates in the normal indication mode during standby time or while communication is performed. In the normal indication mode, the indication control unit 160 controls the lighting of the first through third LEDs 111 to 113 so that each of them indicates a separate piece of information.

The indication control unit 160 also monitors the connection control unit 121 and the communication control unit 122. As shown in Fig. 11, when the indication control unit 160 detects termination of the communication between the high-level equipment 10 and the management computer 51 (step S201), the indication control unit 160 changes its operation mode to the result indication mode (steps S202 through S205). Operations in the result indication mode will be described below.

First, the indication control unit 160 determines the result of the communication from the operation conditions of the connection control unit 121, the communication control unit 122, and the communication module 20 (step S202). More specifically, the indication control unit 160 first determines whether the communication has terminated normally or abnormally. Further, in the case of a normal termination, the indication control unit 160 identifies the reason for the termination. On the other hand, in the case of an abnormal termination, it identifies the cause of the abnormal condition. Next, the indication control unit 160 references the result information code table to acquire indication form information in accordance with the result of the communication (step S203). Then, the indication control unit 160 turns off all the LEDs 111 through 113 of the indication unit 110 for a predetermined time (e.g., about one second) (step S204). This is to denote that transition from the normal indication mode to the result indication mode has taken place. Next, the indication control unit 160 controls indication on the indication unit 110 in accordance with the indication form information (step S205).

The control of the indication unit 110 based on indication form information will be described in detail. In this embodiment, two figures, such as "2→3", are stored as indication form information (see Fig. 5). Each of the figures is a decimal notation based on the assumption that turning on and off of the LEDs 111 to 113 of the indication unit 110 are a 3-digit binary number. That is, "3" means that the first LED 111 and the third LED 113 are turned on and the second LED 112 is turned off. When the indication form information is "2→3", for example, it means to turn on only the second LED 112 for a predetermined time (e.g., 0.5 seconds), thereafter turn on the first LED 111 and the third LED 113 and turn off the second LED 112. In this manner, this embodiment indicates result information by way of the lighting patterns of the indication unit 110 and temporal change of the lighting patterns. The indication control unit 160 repeats such indication control a predetermined number of times (e.g., ten times).

Upon termination of the result indication mode described above, the indication control unit 160 enters the normal indication mode (step S206).

As bas been described, the connection adapter 1 of this embodiment makes possible communication using the radio packet communication network 40, which the high-level equipment 10 did not originally presuppose, without requiring remodeling or altering of the high-level equipment 10. Further, the connection adapter 1 of this embodiment provides good maintainability because the result of communication is indicated on the indication unit 110 each time communication between the high-level equipment 10 and the management computer 51 terminates. The connection adapter 1 is particularly advantageous in that information identifying the cause of an abnormal condition is indicated as result information when communication has terminated abnormally. In addition, since this communication result information is indicated using the indication unit 110 which is also used for indicating general matters, such as radio wave condition, traffic and power supply, it does not involve additional costs.

Although the present invention has been so far described in detail with respect to the embodiment thereof, the invention is not limited to this embodiment. For instance, while the embodiment above concerned a telemetering system for monitoring the sewage flow rate, the present invention is applicable to other telemetering and telematics systems as well.

Also, the embodiment described above illustrated a communication module of the CDMA standards, the invention can be also implemented with communication modules of other standards. Similarly, other interface standards than those cited above can also be applied at the high-level equipment side.

Further, although the above-described embodiment showed that communication result information and normal time information are indicated on the common indication unit 110, separate indication units may be provided for each piece of information. Also, although the above-described embodiment indicates communication result information in the form of the lighting pattern of the LEDs 111 through 113 and the temporal change thereof, the present invention can be also implemented with other forms of indication as long as they can indicate result information. For instance, numerical values may be directly displayed using 7-segment LEDs or figures and/or character strings may be directly displayed on a liquid crystal display or other kinds of display device.

## Claims

1. A connection adapter for communication devices, comprising:
a first interface (124) for connection to a communication device (20) for use in a radio packet communication network (40);
a second interface (123) for connection to high-level equipment (10) which performs communication utilizing TCP/IP by using said communication device (20);
a connection controller (121) which controls the connection between said high-level equipment (10) and said radio packet communication network (40);
a communication controller (122) which relays communication by said high-level equipment (10) using said communication device (20); and
an indicator (110) which indicates information on the result of said communication each time the communication terminates.

2. The connection adapter for communication devices according to claim 1, wherein:
said indicator (110) further indicates status information such as operation condition and radio wave condition during communication and during standby.

3. The connection adapter for communication devices according to claim 1, wherein:
said result information includes at least information on whether or not communication has normally terminated, and if the communication has abnormally terminated, includes information useful for identifying the cause of the abnormal termination.

4. The connection adapter for communication devices according to claim 1, wherein:
said indicator (110) comprises a plurality of light emitting elements (111, 112, 113), and indicates result information by way of combination of the lighting or temporal change of lighting patterns of the light emitting elements (111, 112, 113).
